# EUROPÄISCHE PATENTANMELDUNG

(11) **EP 2 854 035 A1**
(43) Veröffentlichungstag der Anmeldung: **01.04.2015**
(21) Anmeldenummer: 13186162.7
(22) Anmeldetag: 26.09.2013
(51) Int. Cl.: G06F 11/263

(54) **Verfahren zum Generieren von Test-Code für ein System**

(71) Anmelder: Siemens Schweiz AG, 8047 Zürich (CH)
(72) Erfinder: Jankovic, Kalman, 8212 Neuhausen (CH)
(74) Vertreter: Maier, Daniel Oliver

(57) **Zusammenfassung**

Verfahren zum Generieren von Test-Code (9) für ein System (3), umfassend den Verfahrensschritt:
- Aufzeichnen einer Prüfung (8) von mindestens einer zu erwartenden Reaktion (8a) eines Systems (3) mittels eines Test-Recorders (1).

## Beschreibung

Die vorliegende Erfindung bezieht sich auf das technische Gebiet des Generierens von Test-Code für ein System.

Eine Testspezifikation beschreibt wie man die Funktionalität eines beispielsweise als Software-Anwendung ausgestalteten Systems testet. Die Testspezifikation ist in Testschritte gegliedert. Jeder Testschritt beschreibt welche Aktionen man ausführen soll und welche erwarteten Reaktionen des Systems man überprüfen soll. Tabelle 1 zeigt ein Schema einer Testspezifikation, welche Testschritte umfasst. Die Testschritte umfassen jeweils vorzugsweise mindestens eine Testaktion. Die Testaktionen haben eine oder mehrere erwartete Reaktionen des Systems zur Folge.

**Tabelle 1: Schema einer Testspezifikation**

| **Testschritt** | **Testaktion** | **Erwartete Reaktion des Systems** |
|---|---|---|
| 1 | Aktion 1 | Erwartete Reaktion 1 |
| 2 | Aktion 2 | Erwartete Reaktion 2a |
| | | Erwartete Reaktion 2b |
| | | Erwartete Reaktion 2c |
| 3 | Aktion 3 | Erwartete Reaktion 3 |

Den Test kann man manuell durchführen oder man kann ihn automatisieren. Wenn man automatisierte Tests haben will, programmiert man die Testfälle manuell oder man setzt Test-Recorder ein um Zeit und Kosten zu sparen. Auf dem Markt gibt es zahlreiche Test-Recorder, die die Maus und Tastatur-Eingaben erfassen und wiedergeben können.

Die Test-Recorder sind ziemlich gut sind was die Aufnahme der Test-Aktionen betrifft. Problematisch ist jedoch, dass sie nicht wissen, was die erwarteten Reaktionen des Systems sind. Die Prüfungen der erwarteten Reaktionen wurden manuell programmiert und anschliessend in den Test-Code integriert. Das erhöhte den Pflegeaufwand und die Redundanz.

Es braucht einen Verfahren durch welches man dem Test-Recorder beibringt was alles zu den Erwartungen gehört und wie sie überprüft werden sollen.

Die Reaktionen des Systems sind leider nicht immer an einer einzigen Stelle zu finden sondern sie liegen zerstreut im System herum in verschiedenen GUI-Elementen, Files, im Speicher usw.

Der vorliegenden Erfindung liegt daher die Aufgabe zu¬grunde, das Generieren von Test-Code einfacher und effizienter zu gestalten.

Diese Aufgabe wird durch die in den unabhängigen Ansprüchen beschriebenen Lösungen gelöst. Vorteilhafte Ausgestaltungen der Erfindung sind in weiteren Ansprüchen ange¬geben.

Gemäss einem Aspekt der Erfindung wird ein Verfahren zum Generieren von Test-Code für ein System vorgeschlagen. Dabei wird eine Prüfung von mindestens einer zu erwartenden Reaktion eines Systems mittels eines Test-Recorders aufgezeichnet.

Gemäss einem weiteren Aspekt der Erfindung wird ein Test-Recorder vorgeschlagen. Der Test-Recorder dient dem Generieren von Test-Code für ein System. Der Test-Recorder umfasst ein Aufzeichnungsmittel zum Aufzeichnen von Prüfungen von zu erwartenden Reaktionen des Systems.

Die Erfindung wird nachfolgend anhand der Figuren beispielsweise näher erläutert. Dabei zeigen:
Figur 1 ein Blockdiagramm mit einem Test-Recorder zum Generieren von Test-Code für ein System;
Figuren 2a und 2b Schemen zur Illustration eines Verfahrens und eines Recorders gemäss bevorzugten Ausführungsformen der Erfindung;
Figuren 3a-c Dialogfenster zur Illustration von Testspezifikationen für einen Testfall für eine Anwendung eines Zugleitsystems zum Auflösen von Zug-Konflikten gemäss bevorzugten Ausführungsformen der Erfindung;
Figuren 4a-d Verfahren und Test-Recorder zum Generieren von Test-Code für den Testfall der Figuren 3a-c;
Figur 5 Verfahren und Test-Recorder zum Generieren von Test-Code für den Testfall der Figuren 3a-c;
Figuren 6a und 6b Verfahren und Test-Recorder zum Generieren von Test-Code für den Testfall der Figuren 3a-c;
Figuren 7a-d Verfahren und Test-Recorder zum Generieren von Test-Code für den Testfall der Figuren 3a-c.

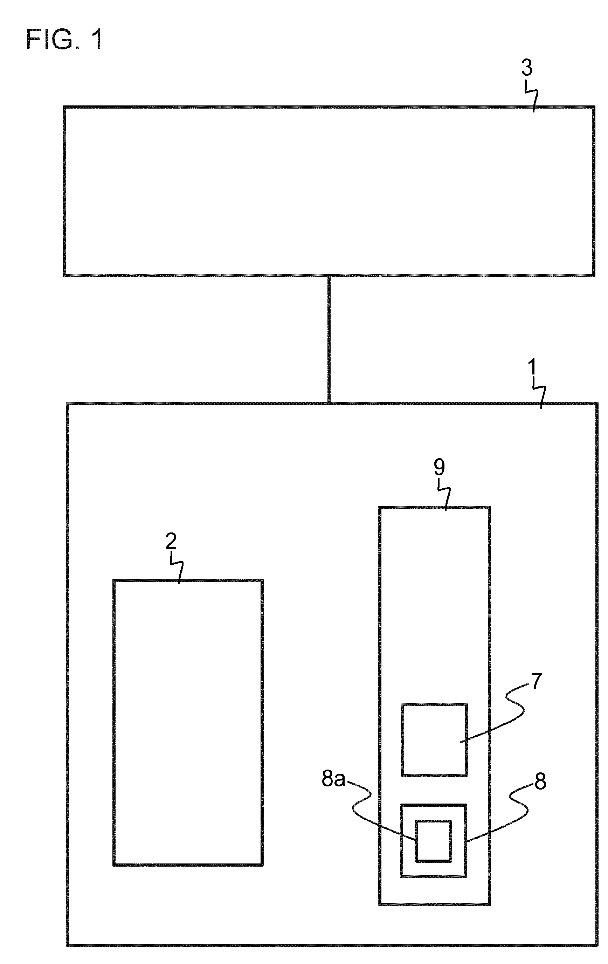

Figur 1 zeigt ein Blockdiagramm mit einem System 3 und einem Test-Recorder 1. Der Test-Recorder 1 generiert Test-Code 9 für das System 3. Der Test-Recorder 1 umfasst ein Aufzeichnungsmittel 2. Das Aufzeichnungsmittel 2 ist adaptiert, Prüfungen 8 von zu erwartenden Reaktionen 8a des Systems 3 aufzuzeichnen.

Der Test-Code 9 für das System 3 wird generiert, indem eine Prüfung 8 von mindestens einer zu erwartenden Reaktion 8a eines Systems 3 mittels des Test-Recorders 1 aufgezeichnet wird.

In dem anhand von Figur 1 dargestellten Ausführungsbeispiel ist das Aufzeichnungsmittel 2 zudem adaptiert, Aktionen 7, welche beispielsweise Eingaben 7 sein können, für das System 3 aufzuzeichnen. Die Aktionen 7 haben die zu erwartenden Reaktionen 8a zur Folge. Gemäss einem bevorzugten Ausführungsbeispiel des Verfahrens wird mindestens eine Eingabe 7 für das System 3 aufgezeichnet. Die Prüfung 8 der mindestens einen zu erwartenden Reaktion 8a wird aufgrund der aufgezeichneten mindestens einen Eingabe 7 aufgezeichnet. Vorzugsweise wird die mindestens eine Eingabe 7 mittels des Test-Recorders 1 aufgezeichnet.

Vorzugsweise umfasst das System 1 ein Leitsystem, vorzugsweise ein Zug-Leitsystem, oder einen elektronischen Fahrplan. Da diese Systeme besonders komplex sind, ergibt sich als Vorteil, dass sich für diese Systeme besonders viel Aufwand einsparen lässt. Dieser Vorteil kommt zusätzlich zum Tragen, wenn die zu erwartenden Reaktionen 8a des Systems eine Anzeige oder ein Auflösen von Konflikten und/oder eine Anzeige von Störungszusammenhängen und/oder eine Reaktion eines Eingabedialogs und/oder eines Auswahldialogs umfassen.

Wenn das Aufzeichnen der Prüfungen 8 der zu erwartenden Reaktionen 8a mittels eines Eingabedialogs und/oder mittels eines Auswahldialogs steuerbar ist, lässt sich eine Prüfung auf besonders einfache und intuitive Weise aufzeichnen.

Vorzugsweise umfasst der Test-Code 9 die aufgezeichnete Prüfung 8 und/oder die aufgezeichnete mindestens eine Aktion 7. Indem der Test-Code 9 auf ein modifiziertes System angewendet wird, muss kein neuer Code generiert werden.

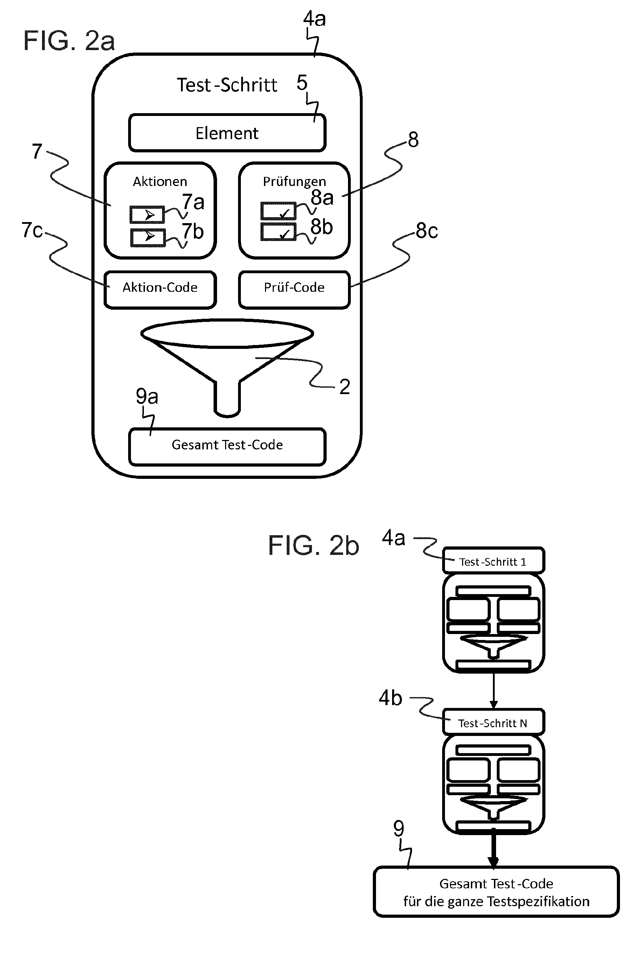

Figuren 2a und 2b zeigen Schemen zur Illustration eines Verfahrens und eines Test-Recorders gemäss bevorzugten Ausführungsformen der Erfindung.

Figur 2a zeigt einen Test-Schritt 4a, der ein Element 5 umfasst. Das Element 5 ist beispielsweise ein Testobjekt. Der Test-Schritt 4a umfasst Aktionen 7 und Prüfungen 8. Die Aktionen 7 können beispielsweise die Eingaben 7a, 7b umfassen. Die Prüfungen 8 können die Reaktionen 8a, 8b umfassen. Anhand der Aktionen 7 wird Aktion-Code 7c erzeugt. Anhand der Prüfungen 8 wird Prüf-Code 8c erzeugt. Der Aktion-Code 7c und der Prüf-Code 8c wird vorzugsweise durch das Aufzeichnungsmittel 2 zu einem Gesamt Test-Code 9a kombiniert.

Figur 2b illustriert, wie für mehrere Test-Schritte 4a, 4b ein Gesamt Test-Code 9 für die ganze Testspezifikation kombiniert wird.

In jeder Anwendung, die eine graphische Anwenderschnittstelle (GUI) besitzt, ist es anhand der Analyse und Synthese der Eigenschaften der GUI-Elemente möglich, einen Kontext anzubieten, der das Prüfen des gesamten Funktionsumfangs der Anwendung möglich macht.

Somit ist es ebenfalls möglich beliebig komplizierten Prüf-Code zu generieren, der die gesamte Funktionalität der Anwendung abdeckt.

Fazit: Man kann zu jedem Testschritt per Mausklick beliebig viele und beliebig komplizierte Prüfungen hinzufügen welche automatisch als Code in den Testfall einfliessen.

Das CheckPicking Verfahren ermöglicht ein geregeltes, planmässiges Sammeln der zu überprüfenden Reaktionen des Systems, die Umwandlung dieser Prüfungen in Prüf-Code und die automatische Integration des Prüf-Codes in den Gesamt Test-Code.

Als Vorteil ergibt sich, dass Testfälle automatisiert werden können, die nicht nur Aktionen ausführen sondern auch beliebig komplizierte Prüfungen der erwarteten Reaktionen beinhalten und das alles in Rekordzeit. Die gesamte Testspezifikation lässt sich somit durch Recording in Test-Code verwandeln. Die Programmierarbeit, die für die Erstellung des Prüf-Codes unumgänglich war, wird dank dem CheckPicking Verfahren auf einige Klicks reduziert und der Prüf-Code fliesst somit in den Gesamt-Test-Code hinein.

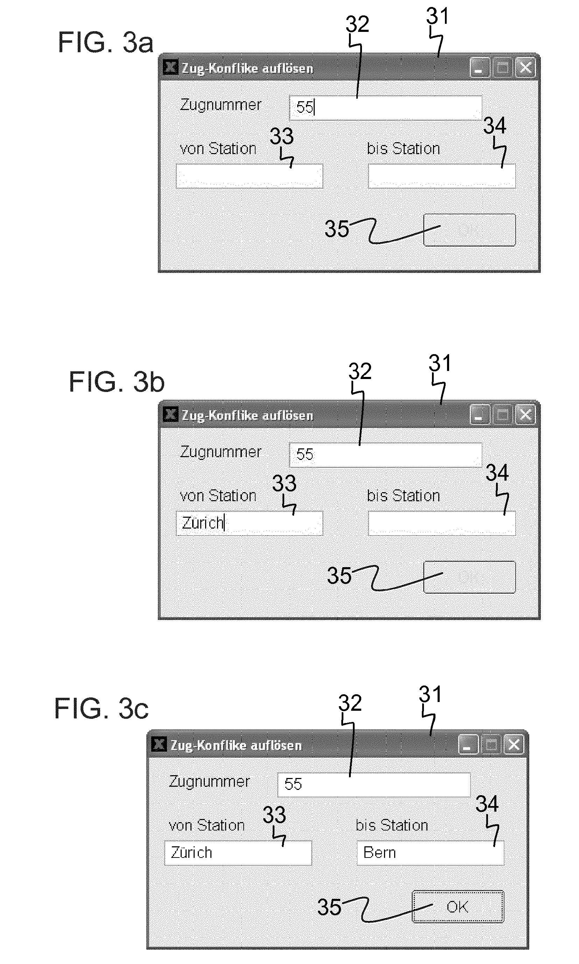

Figuren 3-7 illustrieren Ausführungsbeispiele der Erfindung für ein als Anwendung ausgestaltetes System eines Zugleitsystems zum Auflösen von Zug-Konflikten.

Figuren 3a-c illustrieren Testspezifikationen für einen Testfall für eine Anwendung eines Zugleitsystems zum Auflösen von Zug-Konflikten. Die Figuren 3a-c zeigen jeweils ein Dialogfenster 31 eines als Anwendung ausgestalteten Systems in unterschiedlichen Stadien des Ausfüllens des Dialogfensters 31. Das Dialogfenster 31, welches im Folgenden auch "Zug-Konflikte auflösen" genannt wird, umfasst Eingabefelder 32, 33, 34 und einen Ok-Button 35. Die Eingabefelder 32, 33, 34 umfassen ein Eingabefeld 32 für eine Zugnummer, ein Eingabefeld 33 für eine Ausgangsbahnhof, welches im Folgenden auch "von Station" genannt wird, und ein Eingabefeld 34 für einen Zielbahnhof, welches im Folgenden auch "bis Station" genannt wird.

Unter der Voraussetzung, dass eine Testspezifikation für einen Testfall und ein Test-Recorder der das Check-Picking Verfahren beherrscht vorliegen, lassen sich die Testspezifikationen für das angeführte Beispiel wie folgt zusammenfassen:

In einem Dialog müssen die drei Eingabe-Felder 32, 33, 34 ausgefüllt, der OK Button 35 gedrückt und nach jedem Schritt verschiedene Reaktionen des Systems geprüft werden.

Tabelle 2 beschreibt die Testspezifikationen für den Testfall der Figuren 3a-c.

**Tabelle 2: Testspezifikationen für den Testfall der Figuren 3a-c**

| **Testschritt** | **Testaktion** | **Erwartete Reaktion des Systems** |
|---|---|---|
| 1 | a) Dialog ,Zug-Konflikte auflösen" 31 öffnen und eine gültige Zugnummer eingeben. Wie in Figur 3a dargestellt, wird die Zugnummer "55" in das Eingabefeld 32 eingegeben. | b) Die Eingabe in das Eingabefeld 32 wird akzeptiert. |
| | | c) Der OK Button 35 bleibt inaktiv. |
| | | d) Im Übersichtsbild wird der Zug mit blauem Hintergrund dargestellt, wobei blau bedeutet, dass es noch ungelöste Zug-Konflikte gibt. |
| 2 | a) Im Dialog "Zug-Konflikte auflösen" 31 eine gültige von Station eingeben. Wie in Figur 3b dargestellt, wird die Station "Zürich" in das Eingabefeld 33 eingegeben. | b) Die Eingabe in das Eingabefeld 33 wird akzeptiert. |
| | | c) Der OK Button 35 bleibt inaktiv. |
| 3 | a) Im Dialog "Zug-Konflikte auflösen" 31 eine gültige bis Station eingeben. Wie in Figur 3c dargestellt, wird die Station "Bern" in das Eingabefeld 34 eingegeben. | b) Die Eingabe in das Eingabefeld 34 wird akzeptiert. |
| | | c) Der OK Button 35 wird aktiv. |
| 4 | a) Im Dialog "Zug-Konflikte auflösen" 31 das OK Button 35 drücken. | **b)** Dialog "Zug-Konflikte auflösen" 31 verschwin-det. |
| | | **c)** Alle Konflikte des eingegebenen Zuges werden aufgelöst. |
| | | **d)** In der Protokollierung werden alle Stationen aufgelistet in welchen der Konflikt aufgelöst wurde. |
| | | **e)** Der Meldungsverwalter meldet für den Zug: "Konflikte aufgelöst" |
| | | **f)** In den Log-Files gibt es keine Exceptions. |
| | | **g)** Im Übersichtsbild wird der Zug weiss unterstrichen, was bedeutet, dass alle Zug-Konflikte aufgelöst wurden. |

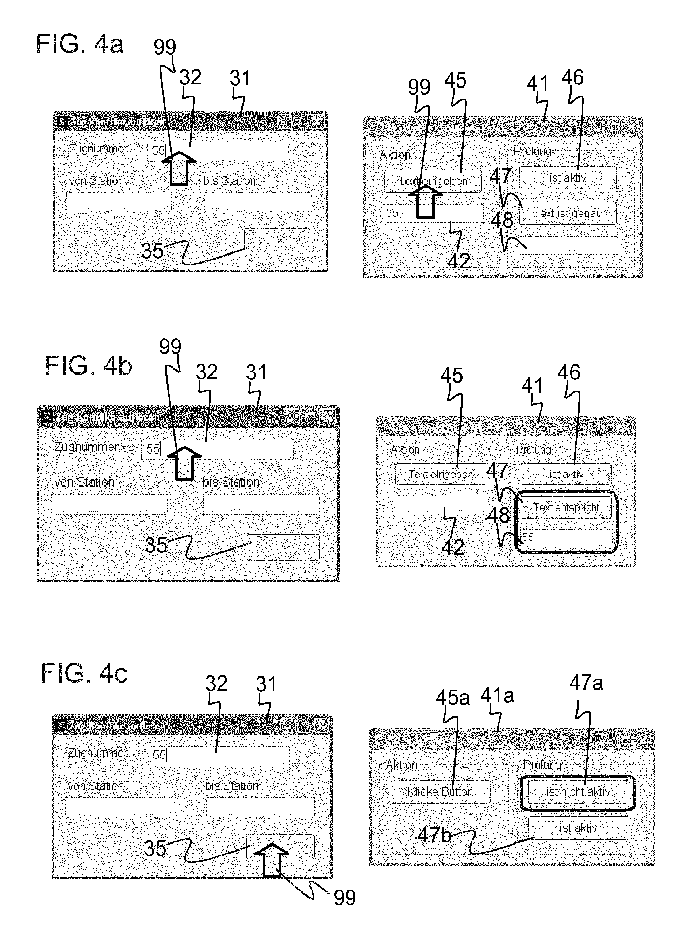

Gemäss bevorzugten Ausführungsformen der Erfindung wird der vorangehend beschriebene Test automatisiert indem er mit einem Test-Recorder aufgezeichnet wird, wie anhand der Figuren 4a-d und der Tabelle 3 beschrieben.

Figuren 4a-d illustrieren ein Verfahren und einen Test-Recorder 1 das Generieren von Testspezifikationen für einen Testfall für eine Anwendung eines Zugleitsystems zum Auflösen von Zug-Konflikten gemäss bevorzugten Ausführungsformen der Erfindung. Die Figuren 4a-c zeigen jeweils auf der linken Seite das Dialogfenster 31 in einem Stadium in welchem die Zugnummer in das Eingabefeld 32 eingetragen ist. Zudem zeigen die Figuren 4a und 4b auf der rechten Seite ein Dialogfenster 41 welches auf Eingabefelder spezialisiert ist und welches adaptiert ist, das Aufzeichnen der Prüfung zu steuern. Das Dialogfenster 41 umfasst als Eingabedialoge ausgestaltete Eingabefelder 42, 48 und als Auswahldialoge ausgestaltete Auswahlfelder 45, 46, 47. Figur 4c zeigt zudem auf der rechten Seite ein Dialogfenster 41a, welches auf Buttons spezialisiert ist und welches adaptiert ist, das Aufzeichnen der Prüfung zu steuern. Das Dialogfenster 41a umfasst die als Auswahldialoge ausgestalteten Auswahlfelder 45a, 47a, 47b.

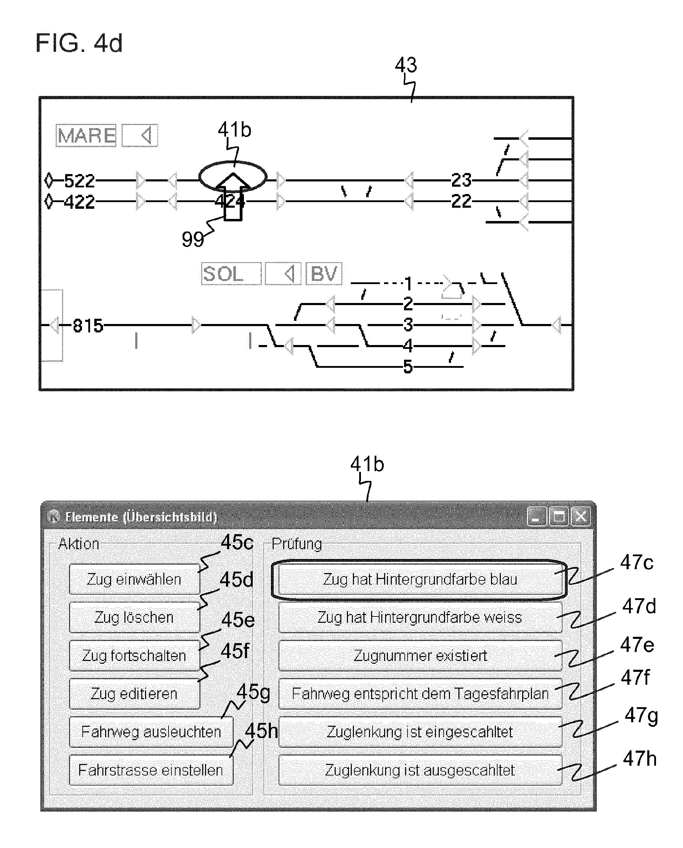

Figur 4d zeigt oben ein Übersichtsfenster 41b, welches Züge anzeigt und unten ein Dialogfenster, welches Auswahldialoge 41c-h, 47c-h umfasst.

Tabelle 3 beschreibt mit Bezug auf die Figuren 4a-d die Aufzeichnung detaillierter Testspezifikationen für den in Tabelle 2 beschriebenen Testschritt 1:

**Tabelle 3: Aufzeichnung detaillierter Testspezifikationen für Testschritt 1**

| **Step** | **Was tun wir** | **Ergebnis** |
|---|---|---|
| 1a | Es wird der Dialog "Zug-Konflikte auflösen" 31 geöffnet und wie in Figur 4a dargestellt die Maus 99 über das Eingabefeld 32 für die Zugnummer positioniert und eine magische Taste gedrückt, z.B die CTRL-Taste. Dadurch öffnet sich das Dialogfenster 41 der auf Eingabefelder spezialisiert ist und bietet uns Aktionen 7 und Prüfungen 8 an. | Der Test-Code für die Aktion "Eingabe der Zugnummer 55" wird generiert und wird zum Gesamt-Test-Code hinzugefügt. |
| | Es wird die Zugnummer "55" als Aktion in das Eingabefeld 42 eingegeben und auf "Text eingeben" im Auswahlfeld 45 geclickt. | |
| 1b | Es soll überprüft werden, ob die eingegebene Zugnummer akzeptiert wurde. Dazu wird die Maus 99 wie in Figur 4b dargestellt wieder über das Eingabefeld 32 für die Zugnummer positioniert und wieder die CTRL-Taste gedrückt. Dadurch öffnet sich der Dialog 41 der auf Eingabefelder spezialisiert ist. Aber diesmal wird das Eingabefeld 48 mit der Zugnummer "55" befüllt und die Prüfung "Text entspricht" im Auswahlfeld 47 angeclickt. | Der Prüf-Code für die Prüfung der Zugnummer wird generiert und wird zum Gesamt-Test-Code hinzugefügt. |
| 1c | Jetzt muss überprüft werden ob der OK Button inaktiv ist. Dazu wird die Maus 99 wie in Figur 4c dargestellt über den OK Button 35 positioniert und die CTRL-Taste gedrückt. Jetzt öffnet sich ein Dialog 41a, der auf Buttons spezialisiert ist wo die Prüfung "ist nicht aktiv" im Auswahlfeld 47a ausgewählt wird. | Der Prüf-Code für die Prüfung ob der OK Button inaktiv ist wird generiert und wird zum Gesamt-Test-Code hinzugefügt. |
| 1d | Als letztes im Schritt 1 muss überprüft werden, ob im Übersichtsbild 43 der Zug mit blauem Hintergrund dargestellt wird. | Der Prüf-Code für die Prüfung ob die Hintergrundfarbe der Zugnummer blau ist wird generiert und wird zum Gesamt-Test-Code hinzugefügt. |
| | Wie in Figur 4d dargestellt, wird dazu die Maus 99 über die Zugnummer im Bild positioniert und die CTRL-Taste gedrückt. Es öffnet sich ein Dialog 41b, der auf die Bilder dieser Anwendung spezialisiert ist und wir wählen die Prüfung 47c: - Zug hat Hintergrundfarbe blau. | |

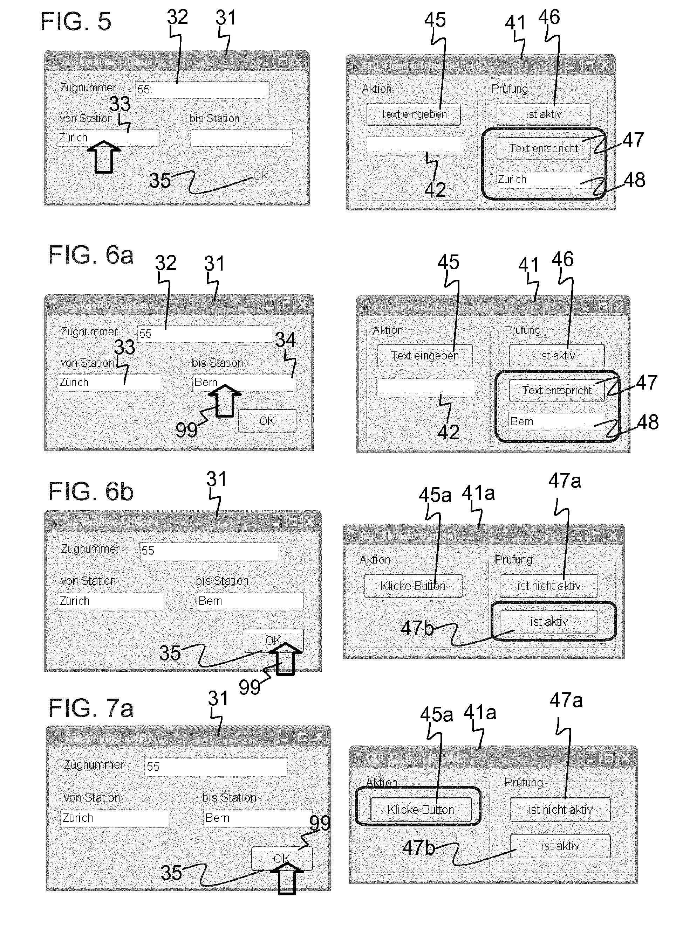

Figur 5 und Tabelle 4 illustrieren die Aufzeichnung detaillierter Testspezifikationen für den in Tabelle 2 beschriebenen Testschritt 2:

**Tabelle 4: Aufzeichnung detaillierter Testspezifikationen für Testschritt 2**

| | | |
|---|---|---|
| 2 | Im zweiten Test-Schritt muss die "von Station" 33 eingegeben werden und geprüft werden, ob die Eingabe akzeptiert wurde, sowie geprüft werden, ob der OK Button 35 noch inaktiv ist. Die Eingabe wird analog zum Schritt 1a) vorgenommen. Die Prüfung der Eingabe wird analog zum Schritt 1b) vorgenommen. | Der Test-Code für die Aktion "Eingabe der von Station" wird generiert. |
| | | Der Prüf-Code für die Prüfung der "von Station" wird generiert. Der Prüf-Code für die Prüfung ob der OK Button nicht aktiv ist wird generiert. |
| | Die Prüfung ob der OK Button 35 inaktiv ist, wird genau so wie im Schritt 1c) vorgenommen. | Somit landen eine Aktion und zwei Prüfungen im Gesamt-Test-Code. |

Figur 6a und 6b und Tabelle 5 illustrieren die Aufzeichnung detaillierter Testspezifikationen für den in Tabelle 2 beschriebenen Testschritt 3:

**Tabelle 5: Aufzeichnung detaillierter Testspezifikationen für Testschritt 3**

| | | |
|---|---|---|
| 3a | Im dritten Test-Schritt muss mit Verweis auf Figur 6a die "bis Station" 34 eingeben und geprüft werden ob die Eingabe akzeptiert wurde. Zudem muss geprüft werden, ob der OK | Der Test-Code für die Aktion "Eingabe der von Station" wird generiert. |
| 3b | Button 35 endlich mal aktiv ist. | Der Prüf-Code für die Prüfung der "von Station" wird generiert. |
| | Die Eingabe der "bis Station" 34 wird analog zum Schritt 1a) durchgeführt.. | Der Prüf-Code für die Prüfung ob der OK Button 35 nicht aktiv ist wird generiert. |
| | Die Prüfung der Eingabe der "bis Station" 34 wird analog zum Schritt 1b) durchgeführt. | Somit werden eine Aktion und zwei Prüfungen zum Gesamt-Test-Code hinzugefügt. |
| 3c | Die Prüfung ob der OK Button 35 aktiv ist, ist nur leicht anders als im Schritt 1c). Dazu wird wie in Figur 6b dargestellt die Maus 99 über den OK Button 35 positioniert und die CTRL-Taste gedrückt. Jetzt öffnet sich wieder der Dialog 41a, der auf Buttons spezialisiert ist. Die Prüfung "ist aktiv" im Auswahlfeld 47b wird ausgewählt. | Der Prüf-Code für die Prüfung ob der OK Button 35 aktiv ist wird generiert und wird zum Gesamt-Test-Code hinzugefügt. |

Figur 7a zeigt auf der linken Seite das vollständig ausgefüllte Dialogfenster 31 und auf der rechten Seite ein Dialogfenster 41a, welches auf Buttons spezialisiert.

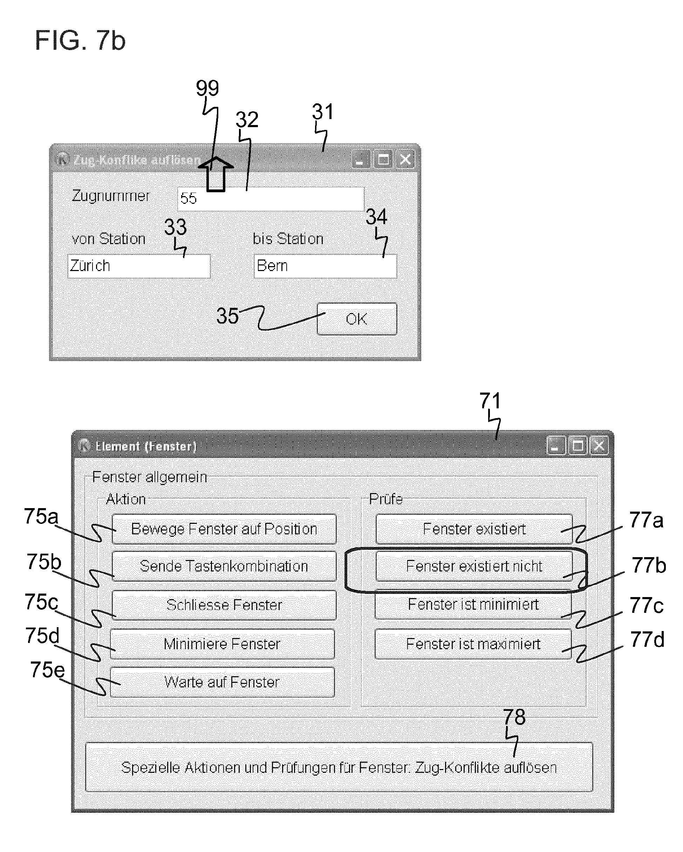

Figur 7b zeigt oben das vollständig ausgefüllte Dialogfenster 31 und unten ein Dialogfenster 71, das allgemein auf Fenster spezialisiert ist. Das Dialogfenster 71 umfasst die Auswahlfelder 75a-e, 77a-d, 78.

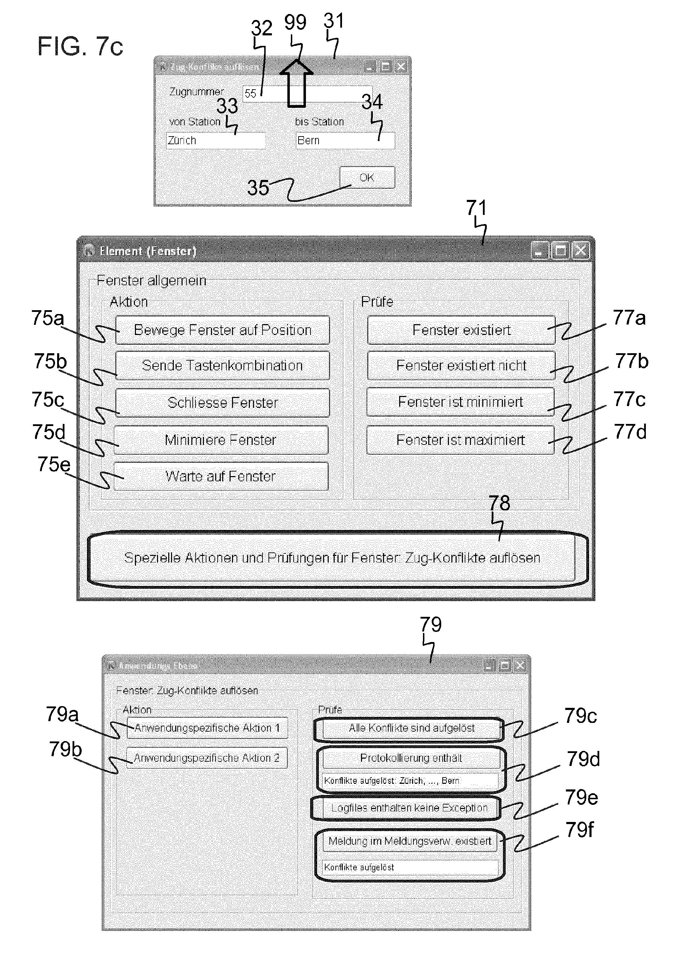

Figur 7c zeigt oben das vollständig ausgefüllte Dialogfenster 31 in der Mitte das Dialogfenster 71 und unten ein Dialogfenster 79, welches Optionen 79a-f für anwendungspezifische Prüfungen umfasst.

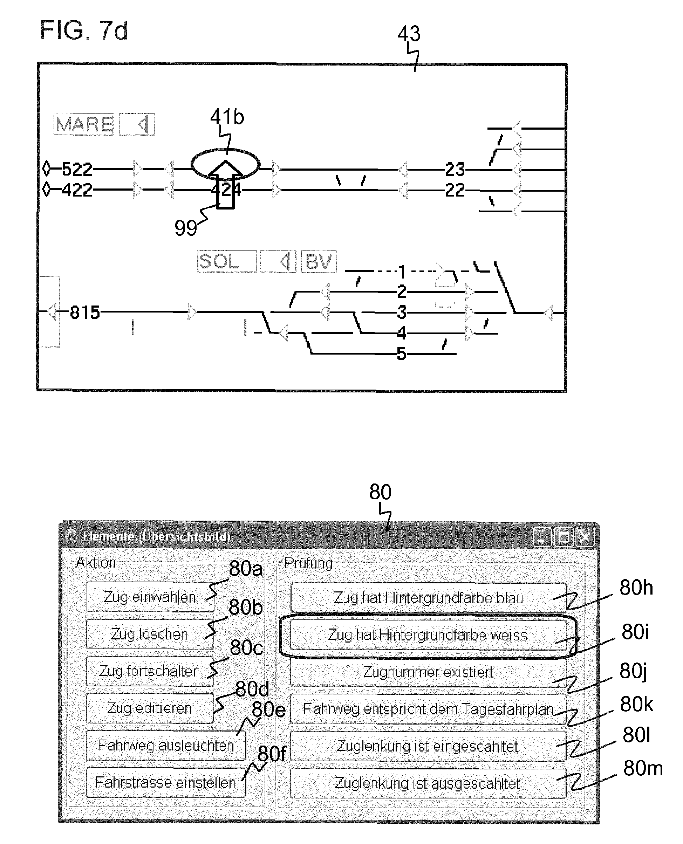

Figur 7d zeigt oben das Übersichtsbild 43 und unten ein Dialogfenster 80. Das Dialogfenster umfasst die Auswahldialoge 80a-1.

Figur 7a-d, sowie Tabelle 6 illustrieren die Aufzeichnung detaillierter Testspezifikationen für den in Tabelle 2 beschriebenen Testschritt 4.

**Tabelle 6: Aufzeichnung detaillierter Testspezifikationen für Testschritt 4**

| | | |
|---|---|---|
| 4a | Die Aktion im vierten Schritt ist: OK Button 35 klicken. | Der Test-Code für die Aktion "Klicke OK Button" wird generiert und der Test-Code wird zum Gesamt-Test-Code hinzugefügt. |
| | Die Maus 99 wird wie in Figur 7a dargestellt über den OK Button 35 positioniert und die CTRL-Taste wird gedrückt. | |
| | Im Dialog 41a der auf Buttons spezialisiert ist wird auf "Klicke Button" 45a geclickt | |
| 4b | Es muss geprüft werden, ob der Dialog "Zug-Konflikte auflösen" 31 verschwindet. | Der Prüf-Code für "Fenster Zug-Konflikte auflösen existiert nicht" wird generiert und |
| | Jetzt öffnet sich ein Dialog 71 der allgemein auf Fenster spezialisiert ist. | zum Gesamt-Test-Code hinzugefügt. |
| | Wir wählen die Prüfung: Fenster existiert nicht. | |
| 4c | Jetzt kommt eine Prüfung die Anwendungs-Wissen braucht. | Der Prüf-Code wird generiert für : |
| 4d | | |
| 4e | Es muss geprüft werden, ob alle Konflikte für den Zug 55 von Zürich bis Bern gelöst sind. | - Alle Konflikte sind aufgelöst |
| 4f | Dazu wird wie in Figur 7c dargestellt die Maus 99 über die Titelleiste des Dialogs 31 positioniert und die CTRL-Taste gedrückt. | - Protokollierung enthält: Konflikte aufgelöst: Zürich, ... , Bern |
| | Danach wird die Auswahl 78 "Spezielle Aktionen und Prüfungen für Fenster: Zug-Konflikte auflösen" gewählt. Dadurch öffnet sich ein Dialogfenster 79. Im Dialogfenster 79 werden die anwendungspezifischen Prüfungen gewählt: | - Meldung im Meldungsverwalter existiert: Konflikte aufgelöst |
| | - 79c: Alle Konflikte sind aufgelöst; | - Logfiles enthalten keine Exceptions |
| | - 79d: Protokollierung enthält: Konflikte aufgelöst: Zürich, ... , Bern; | und der Prüf-Code wird zum Gesamt-Test-Code hinzugefügt. |
| | - 79e: Meldung im Meldungsverwalter existiert: Konflikte aufgelöst; | |
| | - 79f: Logfiles enthalten keine Exceptions. | |
| | | |
| 4g | Zuletzt muss überprüft werden, ob im Übersichtsbild der Zug mit weissem Hintergrund dargestellt wird. | Der Prüf-Code für die Prüfung ob die Hintergrundfarbe der Zugnummer weiss ist wird generiert und wird zum Gesamt-Test-Code hinzugefügt. |
| | Dazu wird wie in Figur 7d dargestellt die Maus 99 über die Zugnummer im Bild 43 positioniert und die CTRL-Taste gedrückt. Im Dialogfenster 80 wird dann die Option "Zug hat Hintergrundfarbe weiss" 80i gewählt. | |

### Fertig!

Damit wurde die ganze Testspezifikation mit einigen Klicks in Test-Code verwandelt. Tabelle 7 gibt einen Überblick über den generierten Test-Code.

**Tabelle 7: Übersicht über den generierten Test-Code**

| Test Schritt | Aktion/ Prüfung | Ausführbarer Test-Code (hier nur exemplarisch) |
|---|---|---|
| 1 | A | - Dialog "Zug-Konflikte auflösen" öffnen |
| | A | |
| | P | - Zugnummer 55 eingeben |
| | P | - Eingabe 55 prüfen |
| | P | - OK Button ist inaktiv prüfen |
| | | - Zug hat Hintergrundfarbe blau prüfen |
| 2 | A | - von Station Zürich eingeben |
| | P | - Eingabe Zürich prüfen |
| | P | - OK Button ist inaktiv prüfen |
| 3 | A | - bis Station Bern eingeben |
| | P | - Eingabe Bern prüfen |
| | P | - OK Button ist aktiv prüfen |
| 4 | A | - OK Button drücken |
| | P | - Fenster "Zug-Konflikte auflösen" existiert nicht |
| | P | |
| | P | - Alle Konflikte aufgelöst prüfen |
| | P | - Protokollierung enthält: |
| | P | Konflikte aufgelöst: Zürich, ..., Bern |
| | P | - Zug 55 hat Hintergrundfarbe weiss prüfen |
| | | |
| | | - Meldung im Meldungsverwalter existiert: |
| | | Konflikte aufgelöst |
| | | - Logfiles enthalten keine Exceptions |

## Patentansprüche

1. Verfahren zum Generieren von Test-Code (9) für ein System (3), umfassend den Verfahrensschritt:
- Aufzeichnen einer Prüfung (8) von mindestens einer zu erwartenden Reaktion (8a) eines Systems (3) mittels eines Test-Recorders (1).

2. Verfahren nach Anspruch 1, umfassend den Verfahrensschritt:
- Aufzeichnen mindestens einer Aktion (7) für das System (3), vorzugsweise mittels des Test-Recorders (1), wobei die Prüfung (8) der mindestens einen zu erwartenden Reaktion (8a) aufgrund der aufgezeichneten mindestens einen Aktion (7) aufgezeichnet wird.

3. Verfahren nach einem der vorhergehenden Ansprüche, wobei das System (3) ein Leitsystem, vorzugsweise ein Zug-Leitsystem, oder einen elektronischen Fahrplan umfasst.

4. Verfahren nach einem der vorhergehenden Ansprüche, wobei die mindestens eine zu erwartenden Reaktion (8a) des Systems (3) eine Anzeige oder ein Auflösen von Konflikten umfasst.

5. Verfahren nach einem der vorhergehenden Ansprüche, wobei die mindestens eine zu erwartende Reaktion (8a) des Systems (3) eine Anzeige von Störungszusammenhängen umfasst.

6. Verfahren nach einem der vorhergehenden Ansprüche, wobei die mindestens eine zu erwartende Reaktion (8a) eine Reaktion eines Eingabedialogs und/oder eines Auswahldialogs umfasst.

7. Verfahren nach einem der vorhergehenden Ansprüche, wobei das Aufzeichnen der Prüfung (8) mittels eines Eingabedialogs und/oder mittels eines Auswahldialogs gesteuert wird.

8. Verfahren nach einem der vorhergehenden Ansprüche, wobei die aufgezeichnete Prüfung (8) und/oder die aufgezeichnete mindestens eine Aktion (7) durch den Test-Code (9) umfasst ist, und wobei der Test-Code (9) auf ein modifiziertes System angewendet wird.

9. Test-Recorder (1), zum Generieren von Test-Code (9) für ein System (3), umfassend:
- ein Aufzeichnungsmittel (2) zum Aufzeichnen von Prüfungen (8) von zu erwartenden Reaktionen (8a) des Systems (3).

10. Test-Recorder (1) nach Anspruch 9, wobei das Aufzeichnungsmittel (2) adaptiert ist, Aktionen (7) für das System (3) aufzuzeichnen, welche die zu erwartenden Reaktionen (8a) zur Folge haben.

11. Test-Recorder (1) nach einem der Ansprüche 9 oder 10, wobei das System ein Leitsystem, vorzugsweise ein Zug-Leitsystem, oder einen elektronischen Fahrplan umfasst.

12. Test-Recorder (1) nach einem der Ansprüche 9 bis 11, wobei die zu erwartenden Reaktionen (8a) des Systems eine Anzeige oder ein Auflösen von Konflikten umfassen.

13. Test-Recorder (1) nach einem der Ansprüche 9 bis 12, wobei die zu erwartenden Reaktionen (8a) des Systems eine Anzeige von Störungszusammenhängen umfassen.

14. Test-Recorder (1) nach einem der Ansprüche 9 bis 13, wobei die zu erwarteten Reaktionen (8a) eine Reaktion eines Eingabedialogs und/oder eines Auswahldialogs umfassen.

15. Test-Recorder (1) nach einem der Ansprüche 9 bis 14, wobei das Aufzeichnen der Prüfungen (8) von den zu erwartenden Reaktionen (8a) mittels eines Eingabedialogs und/oder mittels eines Auswahldialogs steuerbar ist.

16. Test-Recorder (1) nach einem der Ansprüche 9 bis 15, wobei der Test-Code (9) ausgestaltet ist auf ein modifiziertes System angewendet zu werden.
